# EUROPÄISCHE PATENTSCHRIFT

(11) **EP 1 571 415 B1**
(45) Veröffentlichungstag und Bekanntmachung des Hinweises auf die Patenterteilung: **17.10.2007**
(21) Anmeldenummer: 05002458.7
(22) Anmeldetag: 05.02.2005
(51) Int. Cl.: G01B 21/08, G01N 21/17, G01N 25/72

(54) **Photothermisches Messsystem**
Photothermal measuring system
Système de mesure photothermique

(30) Priorität: 03.03.2004 DE 102004010267
(43) Veröffentlichungstag der Anmeldung: 07.09.2005
(73) Patentinhaber: Forschungszentrum Karlsruhe GmbH, 76133 Karlsruhe (DE)
(72) Erfinder: Faubel, Werner, Dr., 76344 Eggenstein-Leopoldshafen (DE); Heissler, Stefan, 76287 Rheinstetten (DE)

(56) Entgegenhaltungen:
- DE-A1- 3 510 314
- US-A- 4 468 136
- US-A- 4 522 510
- US-A- 4 591 272
- US-A- 4 874 251
- TULI S ET AL: "Mirage-effect-based depth profiling of micromachined silicon structures" SENSORS AND ACTUATORS A, ELSEVIER SEQUOIA S.A., LAUSANNE, CH, Bd. 64, Nr. 3, 31. Januar 1998 (1998-01-31), Seiten 203-207, XP004116344 ISSN: 0924-4247

## Beschreibung

Die Erfindung betrifft ein photothermisches Aufnahmesystem gemäß dem Oberbegriff des Anspruchs 1.

Die Untersuchung von Oberflächen ist eine wichtige Aufgabe der instrumentellen Analytik. Dabei ist neben der Oberflächenstruktur auch das Tiefenprofil von Bedeutung. Dazu zählt der mögliche Schichtaufbau eines Objekts, dessen Schichtdicke und eventuelle Beschädigungen wie Risse und Einschlüsse.

Hierfür werden photothermische Verfahren wie zum Beispiel die photothermische Ablenkungsspektroskopie (*Photothermal Deflection Spectroscopy,* PTDS) eingesetzt. Bei diesem Verfahren bewirkt, wie in F. Charbonnier und D. Fournier, Rev. Sci. Instrum. Band 57, 1986, Seite 1126, schematisch dargestellt, die Absorption eines optisch anregenden Laserstrahls (Pumplaser) eine entsprechende Änderung des Brechungsindex über dem durch die optische Anregung geringfügig erwärmten Bereich des Objekts. Gleichzeitig ruft diese Absorption einen Gradienten im Brechungsindex innerhalb einer dünnen oberflächennahen Luftschicht oberhalb des Objekts hervor. Durch Abtasten dieses Gradienten mit einem zweiten Laserstrahl aus einem Messlaser ist es möglich, dessen Ablenkung mit der optischen Absorption des Objekts zu korrelieren. Die optische Absorption des Objekts hängt ihrerseits mit Schichteigenschaften wie zum Beispiel Dicke, Dichte oder chemische Zusammensetzung des Objekts zusammen. Mit diesem Verfahren lassen sich Informationen über die Struktur des Objekts bis zu einer Tiefe von ca. 1 mm gewinnen. Im Vergleich zu anderen photothermischen Verfahren ist die photothermische Ablenkungsspektroskopie kostengünstig, da hierfür nur eine Laserdiode und eine Photodiode zur Bestimmung der Ablenkung benötigt werden. Ein weiterer Vorteil besteht in der Wellenlängenunabhängigkeit der Detektion.

F. Charbonnier und D. Fournier, Rev. Sci. Instrum. Band 57, 1986, Seite 1126-1128, offenbaren weiterhin ein so genanntes *Mirage System,* bei dem die beiden Laser (Anregungs- und Messlaser) fest positioniert sind. Hiermit lässt sich die laterale Verteilung auf der ausgedehnten Oberfläche eines Objekts nur durch Fixieren auf einem beweglichen X-/Y-Verschiebetisch untersuchen. Dieses Merkmal schränkt die Einsatzfähigkeit dieser Vorrichtung beträchtlich ein, da bei einem Scan über dessen Oberfläche das zu untersuchende Objekt komplett in den X-/Y-Verschiebetisch mit eingebaut werden muss, wodurch die Objektgröße auf ca. 1 cm x 1 cm x 1 cm beschränkt bleibt.

Die Untersuchung der Oberfläche von größeren Objekten ist nur mit einer Probenentnahme und somit der Beschädigung des Objekts möglich. Dieses Problem führte zur Entwicklung eines mobilen Sensorkopfes, der über Lichtwellenleiter mit dem Messsystem verbunden ist. Nach W. Faubel, G. R. Hofmann, S. Janssen und B. Seidel, Photoacoustic and Photothermal Phenomena: 10th International Conference, (Hrsg. F. Scudieri und M. Bertolotti), American Institute of Physics, AIP Press, 1999, S. 661-663, kann dieser Sensorkopf auf das zu untersuchende Objekt aufgesetzt werden und ermöglicht so eine nahezu zerstörungsfreie Messung. Allerdings kann diese Vorrichtung bereits bei losen oder puderigen Farbaufträgen (z.B. Siebdrucke) zu Schädigungen führen. Ein wesentlicher Nachteil dieses Systems liegt in der fehlenden Scan-Möglichkeit, d.h. es lässt sich immer nur eine Stelle auf dem Objekt untersuchen.

Aus der DE 43 43 076 C2 ist eine Vorrichtung zum photothermischen Prüfen einer Oberfläche eines bewegten Objekts bekannt, die die Oberflächentemperatur einer Feststoffprobe mit Hilfe eines Infrarot-Detektors bestimmt. Nachteilig hieran ist die Empfindlichkeit auf die Außentemperatur und Feuchtigkeit sowie die mangelnde Tiefenauflösung.

Ebenfalls ein Mirage-System (Aufheizung eines Objekts durch Licht und Ablenkung eines Meßstrahls in der das Objekt umgebenden Luftschicht) wird in US 4591272, DE 3510314, US4874251 und US 4468136 verwendet. Während in US 4468136 Meßstrahl oder Heizstrahl bewegt werden, wird in US 4591272 und DE 3510314 das Objekt bewegt. US4874251 offenbart ein Abrastern des Objekts, ohne die Rasterbewegung näher zu spezifizieren.

Ausgehend hiervon ist es die Aufgabe der vorliegenden Erfin-dung, ein photothermisches Aufnahmesystem vorzuschlagen, das die genannten Nachteile nicht aufweist. Insbesondere soll ein photothermisches Aufnahmesystem bereitgestellt werden, das die zerstörungsfreie Untersuchung von ausgedehnten Objekten wie Kunstwerken oder historischen Handschriften erlaubt.

Diese Aufgabe wird durch die Merkmale des Anspruchs 1 gelöst. Die Unteransprüche beschreiben jeweils vorteilhafte Ausgestaltungen der Erfindung.

Ein photothermisches Aufnahmesystem umfasst einen Anregungslaser, der intensitätsmodulierte oder gepulste Anregungslaser-Strahlen erzeugt, die so auf ein Objekt treffen, dass sich die Oberfläche des Objekts geringfügig erwärmt, wodurch sich innerhalb einer dünnen oberflächennahen Luftschicht oberhalb des Objekts ein Gradient im Brechungsindex der Luftschicht bildet, der von einem Messlaser ausgehende Strahlen ablenkt, bevor diese auf einen ortsempfindlichen Detektor wie zum Beispiel eine positions-empfindlichen Photodiode (Vier-Quadranten-Photodiode) oder ein CCD-Array mit hoher Pixeldichte treffen.

Erfindungsgemäß erfolgen Strahlzusammenführung und Strahltrennung über optische Kurzpass- oder Langpassfilter. Ein optischer Kurzpasspassfilter wirkt wie ein dichroitischer Spiegel, d. h. er lässt in Transmission lediglich Licht einer bestimmten Wellenlänge hindurch und reflektiert alles Licht einer höheren Wellenlänge. Alternativ kann ein optisches Langpassfilter eingesetzt werden, der Licht einer bestimmten Wellenlänge hindurch lässt und alles Licht einer niedrigeren Wellenlänge reflektiert.

Die Anregungslaser-Strahlen und die Messlaser-Strahlen treffen derart auf einen ersten beweglichen Spiegel, dass die Strahlen in einer gemeinsamen Strahlführung auf einen ersten optischen Filter treffen, der die Anregungslaser-Strahlen so durchlässt, dass diese das Objekt beaufschlagen, während die Messlaser-Strahlen reflektiert werden und durch eine Sammellinse gehen, bevor diese auf den Detektor treffen.

In einer bevorzugten Ausgestaltung wird die Brennweite der Sammellinse bzw. eines komplexeren Linsensystems, das die Funktion einer Sammellinse aufweist, so gewählt, dass diese im Wesentlichen dem Abstand zum ersten beweglichen Spiegel entspricht. Hierdurch werden unerwünschte Strahlaufweitungen vermieden; der Messstrahl wird weitgehend parallelisiert, bevor er auf den Detektor trifft.

Das photothermische Aufnahmesystem kann streifend (*skimming mode*) oder springend (*bouncing mode*) in beliebigem Winkel eingesetzt werden. Hierzu zwischen dem ersten optischen Filter und der Sammellinse ein erster Spiegel und zwischen der Sammellinse und dem ortsempfindlichen Detektor ein zweiter Spiegel so angeordnet sind, dass die Messlaser-Strahlen entweder parallel über die Oberfläche des Objekts geführt (*skimming mode)* oder auf die Oberfläche des Objekts geführt und von dieser reflektiert werden *(bouncing mode),* bevor sie auf den ortsempfindlichen Detektor treffen.

In einer besonders bevorzugten Ausgestaltung umfasst das erfindungsgemäße scannende photothermische Aufnahmesystem einen Doppel-Laser-Scanner und einen Umlenkspiegel. Um Strahltrennung zu erzielen, wird der Messstrahl vorzugsweise leicht schräg auf die X/Y-Scanner-Spiegel geworfen. Die nach einer Strecke von ca. 1 m erfolgte Trennung der beiden Laserstrahlen, wird zur Umlenkung des Messlaser-Strahls genutzt. Aufgrund des schrägen Strahlverlaufs, ist eine präzise Synchronisation der beiden Strahlen nicht möglich; die Strahltrennung und der Strahlverlauf des Nachweisstrahls erfolgen deshalb erfindungsgemäß über einen optischen Filter und eine Sammellinse, die sich in geeignetem Abstand vom zweiten Scanner-Spiegel befindet.

In dieser besonders bevorzugten Ausgestaltung werden beide Laserstrahlen (Anregungs-/Messlaser-Strahl) über ein bewegliches computergesteuertes Doppel-Spiegelsystem aus den beiden beweglichen Spiegeln (X/Y-Scanner-Spiegel) zur bildlichen Darstellung der Oberfläche eines Objektes führen. Damit wird eine berührungslose und zerstörungsfreie dreidimensionale photothermische Analyse vor Ort ermöglicht, da das zu untersuchende Objekt im Gegensatz zum Stand der Technik nicht mehr über ein mechanisches Translationssystem bewegt werden muss.

Die vorliegende Erfindung weist eine Reihe von Vorteilen auf:
- Es ist keine Bewegung des zu untersuchenden Objekts erforderlich.
- Die Synchronisation der beiden Laserstrahlen ist stets gewährleistet.
- Eine dreidimensionale Verteilung von Stoffen in der Oberfläche des Objekts wird direkt vermessen.
- Je nach Oberflächenbeschaffenheit kann das Objekt im *skimming* oder *bouncing* Modus untersucht werden.
- Es lassen sich auch Objekte mit Dimensionen von mehreren Metern vermessen.

Mit der erfindungsgemäßen Vorrichtung lassen sich ausgedehnte Objekte, deren laterale Abmessungen 10 cm übersteigen, wie Gemälde, Kunstdenkmäler oder Handschriften untersuchen.

Weiterhin kann die Erfindung dazu genutzt werden, um mittels eines tragbaren Sensors direkt vor Ort pharmazeutische Wirkstoffe, die auf die Haut aufgebracht wurden, zu analysieren.

Die Erfindung wird im Folgenden anhand von drei Ausführungsbeispielen näher erläutert. Die Abbildungen zeigen:
- **Fig. 1**: Doppel-Laser-Scannersystem für *skimming* Modus, wobei der Messlaser über beide Spiegel eingekoppelt wird.
- **Fig. 2**: Doppel-Laser-Scannersystem für *skimming* Modus, wobei der Messlaser über einen Spiegel eingekoppelt wird.
- **Fig. 3**: Doppel-Laser-Scannersystem für *bouncing* Modus, wobei der Messlaser über beide Spiegel eingekoppelt wird.

Beispiel 1: Doppelscannersystem für den skimming Modus, wobei der Messlaser über beide Spiegel eingekoppelt wird.

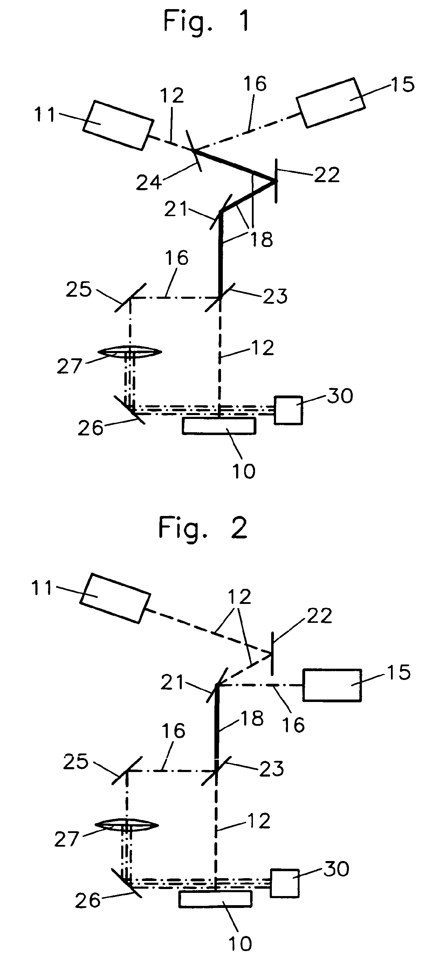

Die Bewegung des Anregungslaserstrahls und dessen Positionierung auf dem Objekt erfolgt über ein Doppel-Laser-Scannersystem, das in **Fig. 1** schematisch dargestellt ist. Der Anregungslaser-Strahl **12** wird dabei zeilenweise über das Objekt **10** geführt. Um den Messlaser-Strahl **16** adäquat zum Anregungslaser-Strahl **12** zu positionieren und zu synchronisieren, wird der Messlaser-Strahl **16** zusammen mit dem Anregungslaser-Strahl **12** über die Scannerspiegel **21, 22** ausgelenkt, wodurch immer die exakte Synchronisation beider Strahlen gewährleistet ist. Beide Laserstrahlen **12, 16** fahren eine Zeilenposition an, wobei der Anregungsstrahl **12** in dieser Zeile über das Objekt **10** fährt. Am Ende angekommen, erfolgt ein Zeilensprung. Zur Realisierung dieses Scans sind beide Laserstrahlen **12, 16** senkrecht zueinander angeordnet.

Der Messlaser-Strahl **16** wird mittels eines optischen Systems derart abgelenkt, dass er über die Oberfläche des Objekts **10** streift oder diese in einem gewissen Winkel trifft. Fallen nun beide Laserstrahlen **12, 16** auf einen bzw. auf beide Scannerspiegel **21, 22,** liegen sie räumlich so eng beieinander, dass eine optische Strahltrennung notwendig wird. Die Strahltrennung erfolgt durch einen optischen Kurzpassfilter **23.** Dieser wirkt wie ein dichroitischer Spiegel, d. h. er lässt lediglich in Transmission Licht einer bestimmten Wellenlänge hindurch und reflektiert alles Licht einer höheren Wellenlänge. Alternativ kann ein optischer Langpassfilter eingesetzt werden, der Licht einer bestimmten Wellenlänge hindurch lässt und alles Licht einer niedrigeren Wellenlänge reflektiert.

### Führung des Anregungslaser-Strahls 12

Der intensitätsmodulierte oder gepulste Anregungslaser-Strahl **12** eines Nd:YAG-Lasers **11** (Wellenlänge 532 nm) wird mittels einer Sammellinse der Brennweite f = 250 mm fokussiert, so dass die Brennebene direkt auf der Oberfläche des Objekts **10** liegt. Der fokussierte Strahl **12** trifft zuvor in seinem Verlauf auf den zweiten Scannerspiegel **22.** Er ist so justiert, dass der Anregungslaser-Strahl **12** genau auf die Drehachse des beweglichen Spiegels **22** trifft. Der Spiegel **22** lenkt nun den Anregungslaser-Strahl **12** in der Nullstellung vertikal nach unten ab. In einer Entfernung von ca. 1 cm darunter ist der erste Scannerspiegel **21** angebracht, der nun den Anregungslaser-Strahl **12** in Richtung des Objekts **10** reflektiert. Durch elektronische Ansteuerung und Drehung beider Spiegel **21, 22** erfolgt die Ablenkung und Positionierung des Laserstrahls in X- und Y- Richtung, d.h. eine horizontale Ablenkung durch den zweiten Spiegel **22** und eine vertikale Ablenkung durch den ersten Spiegel **21.** Nach Durchgang durch den Kurzpassfilter **23** trifft der so positionierte Anregungslaser-Strahl **12** auf das zu untersuchende Objekt **10.** Dieser Aufbau erlaubt nun das gezielte Scannen des Anregungslaser-Strahls **12** an jeden beliebigen Punkt der Oberfläche des Objekts **10.**

### Führung des Messlaser-Strahls 16

Der Messlaser-Strahl **16** tritt aus dem senkrecht montierten Messlaser **15** (He-Ne-Laser, Wellenlänge 633 nm) aus und durchläuft unmittelbar danach eine optische Sammellinse. Deren Brennweite ist mit einer Brennweite von f = 80 mm so gewählt, dass der Laserstrahl auf den ersten Scannerspiegel **21** fokussiert ist. Die von diesem Spiegel **22** in unterschiedlichen Winkeln herauslaufenden Messlaser-Strahlen **16** werden später von einer Sammellinse **27** parallelisiert.
Das Auftreffen sowohl des Messlaser-Strahls **16** als auch des Anregungslaser-Strahls **12** auf den ersten Spiegel **21** und die damit verbundene gemeinsame Ablenkung, stellt die Synchronisation der beiden Laserstrahlen als gemeinsamer Strahl **18** sicher. Sind beide Laserstrahlen **12, 16** durch die im Übrigen vorhandenen optischen Komponenten aufeinander abgestimmt, erübrigt sich aufgrund der gleichzeitigen und wohldefinierten Ablenkung beider Laserstrahlen **12, 16** eine zusätzliche Strahlensynchronisation.
Die beiden abgelenkten Laserstrahlen **12, 16** liegen nun als gemeinsamer Strahl **18** sehr eng nebeneinander. Da aber der Messlaser-Strahl **16** über die Oberfläche des Objekts **10** streifen soll, ist eine optische Strahltrennung erforderlich. Aufgrund der unterschiedlichen Wellenlängen beider Laserstrahlen **12, 16** (532 nm und 633 nm) wird ein Kurzpassfilter **23** als optische Trennkomponente benutzt. Der Filter lässt das Licht mit der niedrigeren Wellenlänge (532 nm) in Transmission nahezu ungehindert hindurch, während er das längerwellige Messlaserlicht (633 nm) reflektiert. Der vom Kurzpassfilter **23** reflektierte und somit im Winkel von 90° abgelenkte Messlaser-Strahl **16** trifft nach einer weiteren Umlenkung durch einen ersten Spiegel **25** auf eine Sammellinse **27** mit einer Brennweite von f = 100 mm. Der Strahl durchläuft, vom ersten Scannerspiegel **21** aus gemessen, bis zur Linse eine Strecke von 100 mm. Dadurch werden die Strahlen, die schräg auf die Linse treffen, parallelisiert, da sie exakt vom Brennpunkt der Sammellinse **27** ausgehen. Der Messlaser-Strahl **16** wird in seinem weiteren Verlauf nochmals um 90° umgelenkt und streicht dann über die Oberfläche des Objekts **10.** Die Ablenkung des Messlaser-Strahls **16** durch den photothermischen Effekt wird mit einem Detektor **30,** einer positions-empfindlichen Photodiode (*position* sensitive *photo diode*, PSD) wie zum Beispiel einer Vier-Quadranten-Photodiode aufgenommen, die seitlich am Objekt sitzt. Der Messlaser-Strahl **16** wird so justiert, dass er stets auf die Mittellinie der Photodiode des auftrifft.

Beispiel 2: Doppelscannersystem für den *skimming* Modus, wobei der Messlaser über einen Spiegel eingekoppelt wird.

Der Aufbau des Aufnahmesystems ist weitgehend identisch mit Beispiel 1. Im einfachsten Fall muss, wie in **Fig. 2** schematisch dargestellt, der Messlaser-Strahl **16** allerdings nicht gleichzeitig in X- und in Y- Richtung ausgelenkt werden, so dass es genügt, wenn er lediglich auf den Y-Scannerspiegel **22** auftrifft.

Beispiel 3: Doppelscannersystem für den *bouncing* Modus, wobei der Messlaser über beide Spiegel eingekoppelt wird.

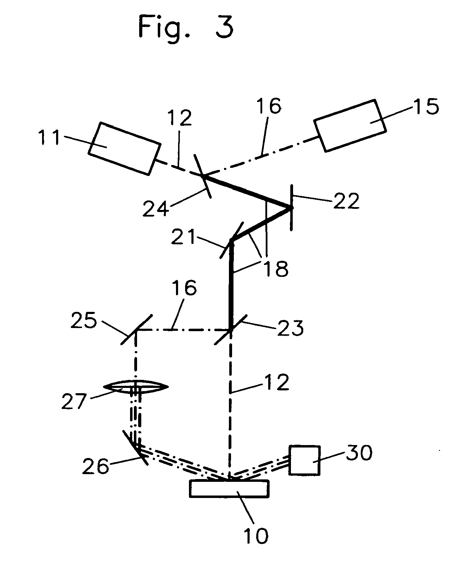

Abweichend vom Doppelscanner (*skimming*) aus Beispiel 1 müssen hier der Anregungslaser-Strahl **12** und der Messlaser-Strahl **16** aus Gründen der Synchronisation zusammen über beide Scannerspiegel **21, 22** geführt werden. Dies erfordert einen höheren technischen und optischen Aufwand. Wie aus **Fig. 3** ersichtlich ist, werden beide Laser dabei bereits vor dem zweiten Scannerspiegel **22** (je nach Laserwellenlänge) über einen zweiten optischen Filter **24,** einen dichroitischen Kurzpass- oder Langpassfilter kolinear, zusammengeführt. Sie durchlaufen beide Scannerspiegel **21, 22** und werden dann wie in Beispiel 1 wieder getrennt. Danach werden der Messlaser **15** und der Detektor **30** optisch so angeordnet, dass der Messlaser-Strahl **16** in einem bestimmten Winkel, der je nach Rauhigkeit des Objekts **10** gewählt wird, auf das Objekt **10** exakt im Beleuchtungsfleck des Anregungslaser-Strahls **12** auftrifft, um das Objekt **10** dann im selben Winkel in Richtung Detektor **30** zu verlassen und diesen zu beaufschlagen.

### Bezugszeichenliste

- **10**: Objekt
- **11**: Anregungslaser
- **12**: Anregungslaser-Strahl
- **15**: Messlaser
- **16**: Messlaser-Strahl
- **18**: Gemeinsamer Strahl
- **21**: erster beweglicher Spiegel (Scannerspiegel)
- **22**: zweiter beweglicher Spiegel (Scannerspiegel)
- **23**: erster optischer Filter (Kurzpassfilter)
- **24**: zweiter optischer Filter (Kurzpassfilter)
- **25**: erster Spiegel
- **26**: zweiter Spiegel
- **27**: Sammellinse
- **30**: (ortsempfindlicher) Detektor

## Patentansprüche

1. Photothermisches Aufnahmesystem, umfassend
a) einen Anregungslaser **(11)** zur Erzeugung intensitätsmodulierter Anregungslaser-Strahlen **(12),** die auf die Oberfläche eines Objekts **(10)** gerichtet sind, wobei durch Abgabe von Wärmestrahlung von der Oberfläche des Objekts **(10)** ein Gradient im Brechungsindex in einer Luftschicht oberhalb des Objekts **(10)** erzeugbar ist,
b) einen Messlaser **(15),** dessen Wellenlänge von der des Anregungslasers **(11)** verschieden ist, zur Erzeugung von Messlaser-Strahlen **(16),** die auf die Luftschicht oberhalb des Objekts **(10)** gerichtet sind und deren Richtung durch den Gradienten im Brechungsindex in der Liftschicht oberhalb des Objekts **(10)** ablenkbar ist, und
c) einen Detektor **(30),** mit dem die Ablenkung der Richtung der Messlaser-Strahlen **(16)** ermittelbar ist,
**dadurch gekennzeichnet, dass**
d) zwischen dem Anregungslaser **(11)** und dem Objekt **(10)** ein erster beweglicher Spiegel **(21)** angeordnet ist, bei dessen Beaufschlagung durch die Anregungslaser-Strahlen **(12)** und die Messlaser-Strahlen **(16)** beide Strahlen als gemeinsamer Strahl **(18)**
e) auf einen ersten optischen Filter **(23)** führbar sind, der durchlässig für die Wellenlänge der Anregungslaser-Strahlen **(12)** und reflektierend für Wellenlänge der Messlaser-Strahlen **(16)** ist, und
f) dass eine Sammellinse **(27)** so angeordnet ist, dass diese vor der Zuführung der Messlaser-Strahlen **(16)** auf die Luftschicht oberhalb des Objekts **(10)** von diesen beaufschlagbar ist.

2. Photothermisches Aufnahmesystem nach Anspruch 1, **dadurch gekennzeichnet, dass** die Brennweite der Sammellinse **(27)** dem Abstand zum ersten beweglichen Spiegel **(21)** entspricht, wodurch die Messlaser-Strahlen **(16)** bei Beaufschlagung der Sammellinse **(27)** parallel ausrichtbar sind.

3. Photothermisches Aufnahmesystem nach Anspruch 1 oder 2, **dadurch gekennzeichnet, dass** zwischen dem ersten optischen Filter **(23)** und der Sammellinse **(27)** ein erster Spiegel **(25)** und zwischen der Sammellinse **(27)** und dem Detektor **(30)** ein zweiter Spiegel **(26)** so angeordnet sind, dass die Messlaser-Strahlen **(16)** parallel über die Oberfläche des Objekts **(10)** führbar sind.

4. Photothermisches Aufnahmesystem nach Anspruch 1 oder 2, **dadurch gekennzeichnet, dass** zwischen dem ersten optischen Filter **(23)** und der Sammellinse **(27)** ein erster Spiegel **(25)** und zwischen der Sammellinse **(27)** und dem Detektor **(30)** ein zweiter Spiegel **(26)** so angeordnet sind, dass die Messlaser-Strahlen **(16)** auf die Oberfläche des Objekts **(10)** führbar und von dieser reflektierbar sind.

5. Photothermisches Aufnahmesystem nach einem der Ansprüche 1 bis 4, **dadurch gekennzeichnet, dass** sich zwischen dem Anregungslaser **(11)** und dem ersten beweglichen Spiegel **(21)** ein zweiter optischer Filter **(24)** befindet, bei dessen Beaufschlagung durch die Anregungslaser-Strahlen **(12)** und die Messlaser-Strahlen **(16)** diese als gemeinsamer Strahl **(18)** über einen zweiten beweglichen Spiegel **(22)** auf den ersten beweglichen Spiegel **(21)** führbar sind.

6. Photothermisches Aufnahmesystem nach einem der Ansprüche 1 bis 4, **dadurch gekennzeichnet, dass** sich zwischen dem Anregungslaser **(11)** und dem ersten beweglichen Spiegel **(21)** ein zweiter beweglicher Spiegel **(22)** befindet, bei dessen Beaufschlagung durch die Anregungslaser-Strahlen **(12)** diese auf den ersten beweglichen Spiegel **(21)** führbar sind.

7. Photothermisches Aufnahmesystem nach einem der Ansprüche 1 bis 6, **dadurch gekennzeichnet, dass** der erste bewegliche Spiegel **(21)** und der zweite bewegliche Spiegel **(22)** jeweils so bewegbar sind, dass die Aufnahme einer Abbildung der Oberfläche des Objekts **(10)** durch den Detektor **(30)** erfolgt.

8. Verwendung eines photothermischen Aufnahmesystems nach einem der Ansprüche 1 bis 7 zur Untersuchung von Objekten, deren laterale Abmessungen 10 cm übersteigen.

9. Verwendung eines photothermischen Aufnahmesystems nach einem der Ansprüche 1 bis 7 zur Untersuchung von Gemälden, Kunstdenkmälern oder Handschriften.

10. Verwendung eines photothermischen Aufnahmesystems nach einem der Ansprüche 1 bis 7 zur Untersuchung von auf eine Oberfläche aufgebrachten pharmazeutischen Wirkstoffen.

## Claims

1. Photo-thermal receiver system, including
a) an excitation laser (11) for producing intensity-modulated excitation-laser beams (12) which are directed onto the surface of an object (10), a gradient in the refractive index being producible in an air layer above the object (10) by the emission of heat radiation from the surface of the object (10),
b) a measuring laser (15), the wavelength of which is different from that of the excitation laser (11), for producing measuring-laser beams (16), which are directed onto the air layer above the object (10), and the direction of which beams is deflectable by the gradient in the refractive index in the air layer above the object (10), and
c) a detector (30), with which the deflection in the direction of the measuring-laser beams (16) is determinable,
**characterised in that**,
d) between the excitation laser (11) and the object (10), a first displaceable mirror (21) is disposed which, when acted-upon by the excitation-laser beams (12) and the measuring-laser beams (16), causes the two beams, in the form of a joint beam (18),
e) to be guidable onto a first optical filter (23), which is permeable to the wavelength of the excitation-laser beams (12) and reflective for the wavelength of the measuring-laser beams (16), and
f) **in that** a convex lens (27) is disposed so that said lens can be acted-upon, prior to the measuring-laser beams (16) being supplied to the air layer above the object (10), by said measuring-laser beams.

2. Photo-thermal receiver system according to claim 1, **characterised in that** the focal length of the convex lens (27) corresponds to the distance from the first displaceable mirror (21), whereby the measuring-laser beams (16) can be aligned in a parallel manner when the convex lens (27) is acted-upon.

3. Photo-thermal receiver system according to claim 1 or 2, **characterised in that** a first mirror (25) is disposed between the first optical filter (23) and the convex lens (27), and a second mirror (26) is disposed between the convex lens (27) and the detector (30), so that the measuring-laser beams (16) can be guided in a parallel manner over the surface of the object (10).

4. Photo-thermal receiver system according to claim 1 or 2, **characterised in that** a first mirror (25) is disposed between the first optical filter (23) and the convex lens (27), and a second mirror (26) is disposed between the convex lens (27) and the detector (30), so that the measuring-laser beams (16) can be guided onto the surface of the object (10) and can be reflected by said surface.

5. Photo-thermal receiver system according to one of claims 1 to 4, **characterised in that**, between the excitation laser (11) and the first displaceable mirror (21), there is situated a second optical filter (24) which, when acted-upon by the excitation-laser beams (12) and the measuring-laser beams (16), causes said beams to be guidable, as a joint beam (18), onto the first displaceable mirror (21) via a second displaceable mirror (22).

6. Photo-thermal receiver system according to one of claims 1 to 4, **characterised in that**, between the excitation laser (11) and the first displaceable mirror (21), there is situated a second displaceable mirror (22) which, when acted-upon by the excitation-laser beams (12), causes said beams to be guidable onto the first displaceable mirror (21).

7. Photo-thermal receiver system according to one of claims 1 to 6,
**characterised in that** the first displaceable mirror (21) and the second displaceable mirror (22) are each displaceable so that an image of the surface of the object (10) is received by the detector (30).

8. Use of a photo-thermal receiver system, according to one of claims 1 to 7, for examining objects, the lateral dimensions of which exceed 10 cm.

9. Use of a photo-thermal receiver system, according to one of claims 1 to 7, for examining paintings, artistic monuments or manuscripts.

10. Use of a photo-thermal receiver system, according to one of claims 1 to 7, for examining pharmaceutical active ingredients applied to a surface.

## Revendications

1. Système d'enregistrement photothermique comprenant :
a) un laser d'excitation (11) pour produire des faisceaux du laser d'excitation (12) dirigés sur la surface d'un objet (10), et dont l'émission du rayonnement de chaleur depuis la surface de l'objet (10) permet de produire un gradient dans l'indice de réfraction dans une couche d'air au-dessus de l'objet (10),
b) un laser de mesure (15) dont la longueur d'onde est différente de celle du laser d'excitation (11), pour produire des faisceaux du laser de mesure (16) dirigés sur la couche d'air au-dessus de l'objet (10) et dont la direction peut être déviée par le gradient dans l'indice de réfraction dans la couche d'air au-dessus de l'objet (10), et
c) un détecteur (30) qui permet de déterminer la déviation de la direction des faisceaux du laser de mesure (16),
**caractérisé en ce que**
d) entre le laser d'excitation (11) et l'objet (10) est disposé un premier miroir mobile (21) qui, lorsqu'il reçoit les faisceaux laser d'excitation (12) et les faisceaux du laser de mesure (16), met les deux faisceaux sous forme d'un faisceau commun (18),
e) guidé sur un premier filtre optique (23) qui laisse passer la longueur d'onde des faisceaux laser d'excitation (12), mais réfléchi la longueur d'onde des faisceaux du laser de mesure (16), et
f) une lentille convergente (27) est disposée pour recevoir les faisceaux du laser de mesure (16) avant de les amener sur la couche d'air au-dessus de l'objet (10).

2. Système d'enregistrement photothermique selon la revendication 1,
**caractérisé en ce que**
la distance focale de la lentille convergente (27) est égale à la distance par rapport au premier miroir mobile (21), de sorte que les faisceaux du laser de mesure (16) peuvent être dirigés parallèlement lorsque la lentille convergente (27) est sollicitée.

3. Système d'enregistrement photothermique selon la revendication 1 ou 2,
**caractérisé en ce qu'**
on dispose un premier miroir (25) entre le premier filtre optique (23) et la lentille convergente (27), et un deuxième miroir (26) entre la lentille convergente (27) et le détecteur (30), de telle manière que les faisceaux du laser de mesure (16) sont guidés parallèlement au-dessus de la surface de l'objet (10).

4. Système d'enregistrement photothermique selon la revendication 1 ou 2,
**caractérisé en ce qu'**
on dispose un premier miroir (25) entre le premier filtre optique (23) et la lentille convergente (27), et un deuxième miroir (26) entre la lentille convergente (27) et le détecteur (30), de telle manière que les faisceaux du laser de mesure (16) sont guidés sur la surface de l'objet (10) et réfléchis par celle-ci.

5. Système d'enregistrement photothermique selon l'une des revendications 1 à 4,
**caractérisé en ce qu'**
un deuxième filtre optique (24) se trouve entre le laser d'excitation (11) et le premier miroir mobile (21) et, lorsqu'il reçoit les faisceaux laser d'excitation (12) et les faisceaux du laser de mesure (16), ceux-ci sont guidés sous forme de faisceau commun (18), au moyen d'un deuxième miroir mobile (22), sur le premier miroir mobile (21).

6. Système d'enregistrement photothermique selon l'une des revendications 1 à 4,
**caractérisé en ce qu'**
un deuxième filtre mobile (22) se trouve entre le laser d'excitation (11) et le premier miroir mobile (21) et, lorsqu'il reçoit les faisceaux laser d'excitation (12), ceux-ci sont guidés sur le premier miroir mobile (21).

7. Système d'enregistrement photothermique selon l'une des revendications 1 à 6,
**caractérisé en ce que**
le premier miroir mobile (21) et le deuxième miroir mobile (22) sont respectivement mobiles pour que le détecteur (30) effectue l'enregistrement d'une image de la surface de l'objet (10)

8. Utilisation d'un système d'enregistrement photothermique selon l'une des revendications 1 à 7, pour examiner des objets dont les dimensions latérales sont supérieures à 10 cm.

9. Utilisation d'un système d'enregistrement photothermique selon l'une des revendications 1 à 7, pour examiner des tableaux, des monuments ou des manuscrits.

10. Utilisation d'un système d'enregistrement photothermique selon l'une des revendications 1 à 7, pour examiner des agents actifs pharmaceutiques appliqués sur une surface.
